# EUROPÄISCHE PATENTSCHRIFT

(11) **EP 3 306 066 B1**
(45) Veröffentlichungstag und Bekanntmachung des Hinweises auf die Patenterteilung: **17.06.2020**
(21) Anmeldenummer: 17194091.9
(22) Anmeldetag: 29.09.2017
(51) Int. Cl.: F02K 1/12, F02K 1/60, F02K 3/06

(54) **TURBOFAN-TRIEBWERK FÜR EIN ZIVILES ÜBERSCHALLFLUGZEUG**
TURBOFAN ENGINE FOR A CIVIL SUPERSONIC AIRCRAFT
TURBINE À DOUBLE FLUX POUR UN AVION SUPERSONIQUE CIVIL

(30) Priorität: 04.10.2016 DE 102016118783
(43) Veröffentlichungstag der Anmeldung: 11.04.2018
(73) Patentinhaber: Rolls-Royce Deutschland Ltd & Co KG, 15827 Blankenfelde-Mahlow (DE)
(72) Erfinder: ROSENAU, Knut, 15378 Herzfelde (DE); MCLEAVY HILL, James Robert, 10247 Berlin (DE)
(74) Vertreter: Müller, Wolfram Hubertus

(56) Entgegenhaltungen:
- US-A- 4 375 276
- US-A- 4 778 109
- US-A- 5 154 052

## Beschreibung

Die Erfindung betrifft ein Turbofan-Triebwerk für ein ziviles Überschallflugzeug gemäß dem Oberbegriff des Patentanspruchs 1.

Nachdem der zivile Überschallflug mit Einstellung des Betriebs des Überschall-Passagierflugzeugs "Concorde" einen Rückschlag erlitten hatte, besteht inzwischen ein erneutes Interesse an der Entwicklung von Überschallflugzeugen für den zivilen Bereich und dementsprechend auch ein Interesse an effizienten Flugtriebwerken, die für einen Überschallbetrieb geeignet sind.

Das im Kampfflugzeug Tornado realisierte Triebwerk RB199 umfasst einen dreistufigen Fan und eine verstellbare Schubdüse mit Schubumkehrer. Konvergent-divergente Schubdüsen sind beispielsweise aus dem Triebwerk EJ200 des Kampfflugzeugs Eurofighter bekannt. Aus der Militärtechnik bekannte Triebwerke für einen Überschallbetrieb sind im zivilen Bereich allerdings nicht einsetzbar, da die Anforderungen beispielsweise hinsichtlich Triebwerkslärm und Verbrauch nicht ausreichend sind.

Die US 5 154 052 A offenbart ein gattungsgemäßes Turbofan-Triebwerk mit einer konvergent-divergenten Schubdüse, bei dem ein Schubumkehrer in die verstellbare konvergent-divergente Schubdüse integriert ist.

Aus den Dokumenten US 4 778 109 A und US 4 375 276 A sind Turbofan-Triebwerke mit zweidimensionale Schubdüsen bekannt, wobei eine Schubumkehr jeweils dadurch erreicht wird, dass bewegbare Klappen eines verstellbaren Bereichs der Schubdüse aufeinander zu gerichtet werden, so dass sie den Strömungskanal durch die Düse blockieren.

Der vorliegenden Erfindung liegt die Aufgabe zugrunde, ein effizientes Turbofan-Triebwerk bereitzustellen, dass für einen Überschallbetrieb geeignet ist.

Diese Aufgabe wird durch ein Turbofan-Triebwerk mit den Merkmalen des Patentanspruchs 1 gelöst. Ausgestaltungen der Erfindung sind in den Unteransprüchen angegeben.

Danach stellt die Erfindung ein Turbofan-Triebwerk für ein ziviles Überschallflugzeug bereit. Dieses umfasst einen Triebwerkseinlauf, der für einen Überschallbetrieb vorgesehen und ausgelegt ist und die einströmende Luft unter Schallgeschwindigkeit verzögert. Es ist ein mehrstufiger, beispielsweise ein zweistufiger oder ein dreistufiger Fan vorgesehen, der hinter dem Triebwerkseinlauf angeordnet ist. Das Triebwerk umfasst ein Kerntriebwerk, das einen Verdichter, eine Brennkammer und eine Turbine aufweist. Es sind ein Primärstromkanal, der durch das Kerntriebwerk führt, und ein Sekundärstromkanal, der am Kerntriebwerk vorbei führt, vorgesehen.

Das Turbofan-Triebwerk umfasst des Weiteren eine verstellbare konvergent-divergente Schubdüse, die das hintere Ende des Triebwerks bildet und die eine Düsenhalsfläche und eine Düsenaustrittsfläche aufweist, wobei zumindest die Düsenhalsfläche verstellbar ist. Als Düsenhalsfläche wird dabei die engste Querschnittsfläche der Schubdüse und als Düsenaustrittsfläche die Querschnittsfläche am hinteren Ende der Schubdüse bezeichnet. Die Schubdüse weist einen vorderen, stromaufwärtigen nicht verstellbaren Bereich und einen hinteren, stromabwärtigen verstellbaren Bereich auf. Weiter ist ein Schubumkehrer vorgesehen, der in die verstellbare konvergent-divergente Schubdüse integriert ist, d.h. zumindest einige der Bestandteile des Schubumkehrers sind durch Bestandteile der Schubdüse gebildet. Dabei ist vorgesehen, dass der Schubumkehrer einschließlich der Schubumkehrertüren, die im Falle einer Schubumkehr den Gasstrom umlenken, in den vorderen, nicht verstellbaren Bereich der Schubdüse integriert ist.

Die Düsenaustrittfläche kann ebenfalls verstellbar sein. In vereinfachter Ausgestaltung der Erfindung kann die Düsenaustrittsfläche als nicht verstellbar ausgeführt sein.

Die Verwendung einer konvergent-divergenten Schubdüse ermöglicht es unter anderem, durch Veränderung der Düsenhalsfläche und damit der Konizität der Schubdüse den Wirkungsgrad des Verdichters einzustellen. Über die Veränderung der Düsenaustrittsfläche und damit der Divergenz am Düsenausgang kann die Geschwindigkeit des Gasstroms eingestellt werden. Die zusätzliche Bereitstellung eines Schubumkehrers und dessen Integration in die Schubdüse ermöglichen einen kurzen Bremsweg des Flugzeugs bei geringen Strukturlasten. Damit stellt die Erfindung insgesamt ein effizientes Triebwerk für einen Überschallbetrieb zur Verfügung.

Das Turbofan-Triebwerk ist beispielsweise für einen Geschwindigkeitsbereich von Ma 1,0 bis Ma 3,0, insbesondere von Ma 1,2 bis Ma 1,8 und für einen Startschubbereich von 44.482 N (10.000 Ibf) bis 444.820 N (100.000 Ibf), insbesondere für einen Startschubbereich von 66.723 N (15.000 Ibf) bis 133.446 N (30.000 Ibf) ausgelegt.

Der hintere, verstellbare Bereich umfasst Verstellmechanismen zur Einstellung der Düsenhalsfläche und ggf. der Düsenaustrittsfläche.

Die Bezeichnungen "vordere" und "hintere" sind in Bezug auf die Strömungsrichtung im Triebwerk zu verstehen. Die Bezeichnung "vordere" bedeutet somit "stromaufwärtig" und die Bezeichnung "hintere" bedeutet "stromabwärtig".

Eine Ausgestaltung der Erfindung sieht vor, dass die Schubdüse eine Innenwand und eine Außenwand umfasst, wobei die Innenwand dem Gasstrom zugewandt ist und den Strömungspfad durch die Schubdüse begrenzt. Die Außenwand grenzt an die Umgebung. Es ist vorgesehen, dass der vordere, stromaufwärtige nicht verstellbare Bereich der Schubdüse einen vorderen, nicht verstellbaren Bereich der Außenwand und einen vorderen, nicht verstellbaren Bereich der Innenwand umfasst. Der hintere, stromabwärtige verstellbare Bereich der Schubdüse umfasst einen hinteren, verstellbaren Bereich der Außenwand und einen hinteren, verstellbaren Bereich der Innenwand. Im hinteren Bereich sind somit sowohl die Innenwand als auch die Außenwand beweglich ausgebildet. Es ist weiter vorgesehen, dass der hintere, verstellbare Bereich der Innenwand einen vorderen verstellbaren Innenwandbereich und einen hinteren verstellbaren Innenwandbereich aufweist. Die Innenwand ist in ihrem hinteren, verstellbaren Bereich somit zusätzlich in zwei Bereiche unterteilt.

Der hintere verstellbare Innenwandbereich ist mit dem vorderen verstellbaren Innenwandbereich beispielsweise über Scharniergelenke verbunden. Der vordere verstellbare Innenwandbereich ist mit dem vorderen, nicht verstellbaren Bereich der Innenwand ebenfalls beispielsweise über Scharniergelenke verbunden. Dies gilt auch für die Verbindung zwischen dem hinteren, verstellbaren Bereich der Außenwand und dem vorderen, nicht verstellbaren Bereich der Außenwand.

Eine Ausgestaltung der Erfindung sieht vor, dass die Schubdüse im vorderen, nicht verstellbaren Bereich der Innenwand mit einer schallabsorbierenden Auskleidung (auch als "noise liner" bezeichnet) versehen ist. Hierdurch wird der Triebwerkslärm deutlich reduziert. Eine schallabsorbierende Auskleidung kann auch in anderen Abschnitten des Triebwerks ausgebildet sein. Beispielsweise kann vorgesehen sein, dass auch der Triebwerkseinlauf mit einer schallabsorbierenden Auskleidung versehen ist.

Gemäß einem Ausführungsbeispiel weist das Turbofan-Triebwerk zwei unabhängig steuerbare Verstellmechanismen auf, die axial verschiebbare Ringe umfassen und dazu vorgesehen und ausgebildet sind, die Austrittsfläche des vorderen verstellbaren Innenwandbereichs (die die Düsenhalsfläche bildet) und die Austrittsfläche des hinteren verstellbaren Innenwandbereichs (die die Düsenaustrittsfläche bildet), zu verstellen. Die Verstellung des vorderen und hinteren verstellbaren Innenwandbereichs mittels verschiebbarer Ringe ist dabei nur beispielhaft zu verstehen. Alternativ kann die Verstellung über andere Verstellaktuatoren, beispielsweise in Form von Kolben oder dergleichen erfolgen.

Zur Ausbildung des vorderen verstellbaren Innenwandbereichs, des hinteren verstellbaren Innenwandbereichs und des verstellbaren Bereichs der Außenwand kann vorgesehen sein, dass diese jeweils aus einer Vielzahl über den Umfang verteilter Segmente bestehen. Beispielsweise sind hierfür jeweils zwischen 4 bis 20, insbesondere 8 bis 16 über den Umfang verteilte Segmente vorgesehen.

Gemäß einer Ausgestaltung der Erfindung laufen die Innenwand und die Außenwand der Schubdüse an der Düsenaustrittskante spitz aufeinander zu. Hierdurch wird eine Verwirbelung der Strömung an der Austrittskante verhindert oder zumindest reduziert.

Dabei kann vorgesehen sein, dass die Innenwand und die Außenwand der Schubdüse durch Führungselemente, beispielsweise eine Rollenführung oder eine Schiebeführung miteinander verbunden sind, wobei die Führungselemente sicherstellen, dass die Innenwand und die Außenwand in jeder Verstellposition der Schubdüse zur Austrittskante hin spitz zulaufen. Insbesondere kann vorgesehen sein, dass der hintere verstellbare Innenwandbereich und der hintere verstellbare Bereich der Außenwand über Führungselemente miteinander verbunden sind.

Damit die Düsenaustrittskante spitz zulaufend ausgebildet ist, ist beispielsweise vorgesehen, dass die Innenwand und die Außenwand der Schubdüse an der Düsenaustrittskante einen geringen radialen Abstand aufweisen, der im Bereich zwischen 5 mm und 30 mm, insbesondere im Bereich zwischen 10 mm und 20 mm liegt.

Der in die Schubdüse integrierte Schubumkehrer ist gemäß einer Ausgestaltung der Erfindung als außenliegender Schubumkehrer ausgebildet, d.h. er verschwenkt im Falle der Betätigung in eine Position hinter der Schubdüse. Eine Ausgestaltung hierzu sieht vor, dass der Schubumkehrer verschwenkbare Schubumkehrertüren aufweist, die durch den vorderen, nicht verstellbaren Bereich der Außenwand gebildet sind. Der vordere, nicht verstellbare Bereich der Innenwand bleibt dabei am Ort und wird nicht verschwenkt, d.h. die Innenwand der Schubdüse wird durch das Betätigen des Schubumkehrers nicht verstellt.

Gemäß einer alternativen Ausgestaltung ist der in die Schubdüse integrierte Schubumkehrer als innenliegender Schubumkehrer ausgebildet, wobei die Strömung seitlich, d.h. nach oben und unten aus der Schubdüse geleitet wird. Hierzu kann beispielsweise vorgesehen sein, dass der Schubumkehrer drehbare Schubumkehrertüren aufweist, die durch die Innenwand und die Außenwand des vorderen, nicht verstellbaren Bereichs der Schubdüse gebildet sind. Nach Drehen der Schubumkehrertüren wird der Gasstrom somit in der Schubdüse nach außen umgelenkt.

In einer weiteren Ausgestaltung ist die Schubdüse zumindest in ihrem verstellbaren Bereich im Querschnitt rechteckig ausgebildet und bildet dementsprechend zwei Seitenwände, eine obere Wand und eine untere Wand aus, die jeweils eben ausgebildet sind. Es ist vorgesehen, dass nur die obere und die untere Wand verstellbar sind. Die Schubdüse ist in ihrem hinteren, verstellbaren Bereich auch bei diesem Ausführungsbeispiel in zwei Teilbereiche unterteilt, einen vorderen und einen hinteren verstellbaren Teilbereich, d.h. die obere Wand besteht aus zwei oberen ebenen Segmenten, die jeweils verstellbar sind, und die untere Wand besteht aus zwei unteren ebenen Segmenten, die jeweils verstellbar sind. Die Segmente können dabei neben der Innenwand der Schubdüse auch die Außenwand der Schubdüse umfassen. Bei einer Verstellung werden das obere und untere Segment des vorderen verstellbaren Bereichs und/oder das obere und untere Segment des hinteren verstellbaren Bereichs in der vertikalen Richtung aufeinander zu oder voreinander weg bewegt. Diese Ausgestaltung besitzt einen besonders einfachen Aufbau, da es für eine Verstellung lediglich ebene Segmente verstellt werden müssen. Die vertikale Richtung bezieht sich dabei auf die Ausrichtung, in der das Triebwerk am Flugzeug angebracht ist.

Alternativ können die ebenen verstellbaren Flächen an ihren Seiten zu den feststehenden Wänden gerundet sein. Weiterhin können die Ober- und Unterkante der Düsenaustrittsfläche nach oben bzw. nach unten gekrümmt ausgeführt werden, so dass die Düsenaustrittsfläche von einem rechteckigen Querschnitt abweichen kann. Dadurch kann eine bessere äußere Umströmung der Schubdüse erreicht werden.

Das Turbofan-Triebwerk umfasst einen mehrstufigen Fan. Dieser ist gemäß einer Ausgestaltung der Erfindung derart ausgebildet, dass er zur Lärmreduktion große axiale Abstände zwischen den Fanrotor-Schaufeln und den Fanstator-Schaufeln aufweist. Jede Fanstufe des mehrstufigen Fans weist einen Fanrotor und eine Fanstator auf. Gemäß einer Ausgestaltung ist vorgesehen, dass für mindestens einen Fanrotor oder Fanstator gilt, dass in der radialen Strömungsmitte der axiale Abstand zwischen den Schaufeln eines Fanrotors oder Fanstators und den Schaufeln des in Strömungsrichtung unmittelbar stromaufwärts angeordneten Fanstators oder Fanrotors zwischen 60% und 150%, insbesondere zwischen 80% und 130% der axialen Länge der Schaufeln des stromaufwärts angeordneten Fanstators oder Fanrotors beträgt.

Dies bedeutet bei einem zweistufigen Fan, dass in der radialen Strömungsmitte der axiale Abstand zwischen den Schaufeln des Fanstators der ersten Stufe zu den Schaufeln des Fanrotors der ersten Stufe zwischen 60% und 150%, insbesondere zwischen 80% und 130% der axialen Länge der Schaufeln des Fanrotors beträgt, und/oder dass der axiale Abstand zwischen den Schaufeln der Fanrotors der zweiten Stufe zu den Schaufeln des Fanstators der ersten Stufe zwischen 60% und 150%, insbesondere zwischen 80% und 130% der axialen Länge der Schaufeln des Fanstators der ersten Stufe beträgt.

Um eine bessere Strömung von der ersten Fanstufe zur zweiten Fanstufe zu erreichen, befindet sich in einer weiteren Ausgestaltung der Erfindung die Blattspitze an der Einlaufkante (d.h. der axial vorderen Kante) der zweiten Rotorstufe des Fans bezogen auf die Maschinenachse zwischen 2% bis 10%, insbesondere zwischen 3% bis 6% radial weiter innen als die Blattspitze an der Einlaufkante der ersten Rotorstufe des Fans.

Es kann vorgesehen sein, dass die Statorschaufeln des Fans um ihre radiale Achse drehbar sind.

Zur Reduzierung des Luftwiderstands der Triebwerksgondel sieht eine Ausgestaltung der Erfindung vor, dass das Turbofan-Triebwerk in einer Triebwerks-Gondel mit kreisförmigem oder näherungsweise kreisförmigem Querschnitt angeordnet ist, wobei die Triebwerks-Gondel keine lokalen Verdickungen für Getriebe und/oder Nebenaggregate aufweist. Ein näherungsweise kreisförmiger Querschnitt liegt dabei dann vor, wenn der Radius entlang des Umfangs um nicht mehr als 10 % seines maximalen Wertes variiert. Die Erfindung sieht gemäß dieser Ausführungsvariante somit eine schlanke Triebwerksgondel ohne lokale Verdickungen vor.

Eine weitere Ausgestaltung der Erfindung sieht vor, dass im Antriebsstrang zwischen einer Niederdruckturbine des Triebwerks und dem Fan ein Untersetzungsgetriebe vorgesehen ist, um die Drehzahl von einer schnelllaufenden Niederdruckturbine auf den mehrstufigen Fan zu untersetzen. Das Untersetzungsgetriebe ist beispielsweise als Planetengetriebe ausgebildet.

Weiter kann vorgesehen sein, dass ein stromaufwärts des Fans angeordneter Nasenkonus in axialer Richtung verschiebbar ausgebildet ist. Der axial verschiebbare Nasenkonus wird beispielsweise über eine axial vor dem Fanrotor befindliche Struktur, die am Fangehäuse oder dem Triebwerkseinlauf abgestützt ist, gehalten. Durch die Verschiebbarkeit des Nasenkonus kann der Triebwerkseinlauf an unterschiedliche Betriebsbedingungen angepasst werden. Beispielsweise kann ein vollständiges Ausfahren des Nasenkonus bei höheren Geschwindigkeiten ab etwa Ma 1,5 vorgesehen sein.

Das Turbofan-Triebwerk weist einen hinter dem Kerntriebwerk angeordneten Mischer auf, der Luft des Primärstromkanals und Luft des Sekundärstromkanals mischt. Gemäß einer Ausgestaltung ist vorgesehen, dass der Mischer und/oder ein Austrittskonus des Triebwerks axial verschiebbar ausgebildet sind. Beispielsweise kann eine Verschiebbarkeit über Stellzylinder vorgesehen sein, die außerhalb der Niederdruckturbine oder außerhalb des Nebenstromgehäuses angeordnet und beispielsweise über Kipphebel betätigbar sind. Dabei ist vorgesehen, dass bei Schallgeschwindigkeit der Mischer und/oder der Austrittskonus voll ausgefahren sind.

Die vorliegende Erfindung kann in einem zivilen Überschallflugzeug eingesetzt werden.

Dabei kann vorgesehen sein, dass ein Hilfsgeräteträger des Turbofan-Triebwerks und/oder die von dem Hilfsgeräteträger angetriebenen Hilfsgeräte zumindest teilweise in einem Pylon und/oder im Flugzeugrumpf montiert sind. Die Verlagerung des Hilfsgeräteträgers und/oder der Hilfsgeräte aus dem Triebwerk heraus in den Pylon und/oder den Flugzeugrumpf ermöglicht eine schlanke Gondel mit geringem Luftwiderstand.

Die Erfindung wird nachfolgend unter Bezugnahme auf die Figuren der Zeichnung anhand mehrerer Ausführungsbeispiele näher erläutert. Es zeigen:
- Figur 1: eine teilweise geschnittene Ansicht eines Ausführungsbeispiels eines Turbofan-Triebwerks, das einen außenliegenden, in eine Schubdüse integrierten Schubumkehrer aufweist;
- Figur 2: eine vergrößerte Darstellung der Schubdüse der Figur 1;
- Figur 3: die Schubdüse der Figur 2 ohne äußere Verkleidungselemente;
- Figur 4: die Schubdüse der Figur 2 in einer teilweise geschnittenen Ansicht;
- Figur 4a: eine vergrößerte Darstellung der Düsenaustrittskante der Schubdüse der Figur 2, die durch eine Innenwand und eine Außenwand der Schubdüse gebildet ist, die zur Düsenaustrittskante hin spitz zusammenlaufen;
- Figur 5: die Schubdüse der Figur 2 in einer weiteren Darstellung, die den Verstellmechanismus zur Verstellung der Schubdüse zeigt;
- Figur 6: die Schubdüse der Figur 2 in einer weiteren Darstellung, in der die Düsenhalsfläche maximal und die Düsenaustrittsfläche ebenfalls maximal ist;
- Figur 7: die Schubdüse der Figur 2 in einer weiteren Darstellung, in der die Düsenhalsfläche minimal und die Düsenaustrittsfläche maximal ist;
- Figur 8: die Schubdüse der Figur 2 in einer weiteren Darstellung, der die Düsenhalsfläche minimal und die Düsenaustrittsfläche ebenfalls minimal ist;
- Figur 9: die Schubdüse der Figur 2 nach Auslösen des in die Schubdüse integrierten Schubumkehrers;
- Figur 10: ein Ausführungsbeispiel eines Turbofan-Triebwerks, das einen innenliegenden, in die Schubdüse integrierten Schubumkehrer aufweist;
- Figur 11: ein weiteres Ausführungsbeispiel eines Turbofan-Triebwerks, das einen innenliegenden, in die Schubdüse integrierten Schubumkehrer aufweist, wobei die Schubdüse ebene, in der vertikalen Richtung verstellbare Segmente aufweist;
- Figur 12: ein weiteres Ausführungsbeispiel eines Turbofan-Triebwerks mit Schubdüse und darin integriertem Schubumkehrer, wobei das Turbofan-Triebwerk ein Untersetzungsgetriebe zur Reduktion der Fandrehzahl aufweist;
- Figur 13: ein weiteres Ausführungsbeispiel eines Turbofan-Triebwerks mit Schubdüse und darin integriertem Schubumkehrer, wobei das Turbofan-Triebwerk einen in axialer Richtung verstellbaren Nasenkonus aufweist;
- Figur 14: ein weiteres Ausführungsbeispiel eines Turbofan-Triebwerks mit Schubdüse und darin integriertem Schubumkehrer, wobei das Turbofan-Triebwerk einen in axialer Richtung verschiebbaren Mischer und/oder einen in axialer Richtung verschiebbaren Austrittskonus aufweist;
- Figur 15: ein nicht die Erfindung betreffendes Beispiel eines Turbofan-Triebwerks mit Schubdüse und darin integriertem Schubumkehrer, wobei ein Verstellmechanismus vorgesehen ist, der einen auf dem Drehpunkt der Schubumkehrertüren gelagerten Exzenter umfasst;
- Figur 16: das Turbofan-Triebwerk der Figur 15 bei geöffnetem Schubumkehrer; und
- Figur 17: in schematischer, teilweise geschnittener Ansicht von vorne die Befestigung eines Turbofan-Triebwerks an einem Flugzeugrumpf.

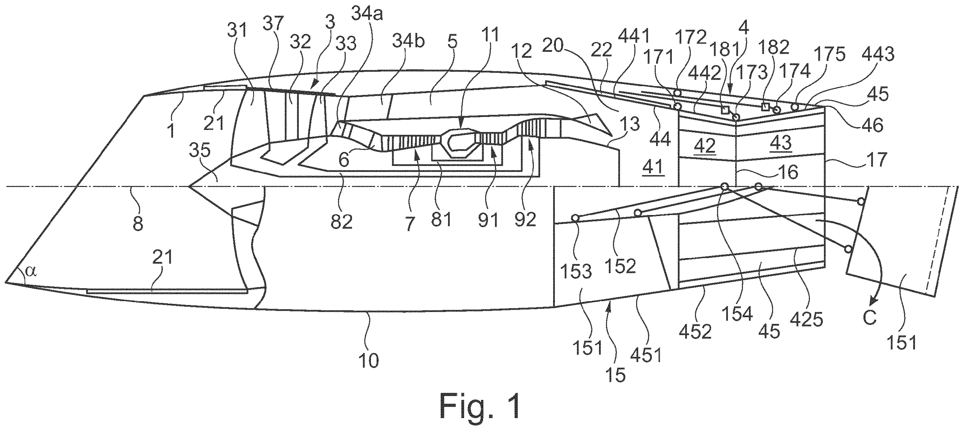

Die Figur 1 zeigt ein Turbofan-Triebwerk für ein ziviles Überschallflugzeug. Das Turbofan-Triebwerk umfasst einen Triebwerkseinlauf 1, einen mehrstufigen Fan 3, einen Primärstromkanal 6, der durch ein Kerntriebwerk führt, einen Sekundärstromkanal 5, der an dem Kerntriebwerk vorbei führt, einen Mischer 12 und eine konvergent-divergente Schubdüse 4, in die ein Schubumkehrer 15 integriert ist.

Das Turbofan-Triebwerk besitzt eine Maschinenachse oder Triebwerksmittellinie 8. Die Maschinenachse 8 definiert eine axiale Richtung des Turbofan-Triebwerks. Eine radiale Richtung des Turbofan-Triebwerks verläuft senkrecht zur axialen Richtung.

Das Kerntriebwerk weist in an sich bekannter Weise einen Verdichter 7, eine Brennkammer 11 und eine Turbine 91, 92 auf. Im dargestellten Ausführungsbeispiel umfasst der Verdichter einen Hochdruckverdichter 7. Ein Niederdruckverdichter ist durch die nabennahen Bereiche des mehrstufigen Fanrotors 3 gebildet. Die hinter der Brennkammer 11 angeordnete Turbine umfasst eine Hochdruckturbine 91 und eine Niederdruckturbine 92. Die Hochdruckturbine 91 treibt eine Hochdruckwelle 81 an, die die Hochdruckturbine 91 mit dem Hochdruckverdichter 7 verbindet. Die Niederdruckturbine 92 treibt eine Niederdruckwelle 82 an, die die Niederdruckturbine 92 mit dem mehrstufigen Fan 3 verbindet.

Das Turbofan-Triebwerk ist in einer Triebwerksgondel 10 angeordnet. Diese ist beispielsweise über einen Pylon mit dem Flugzeugrumpf verbunden.

Der Triebwerkseinlauf 1 bildet einen Überschall-Lufteinlauf und ist dementsprechend dafür vorgesehen und geeignet, die einströmende Luft auf Geschwindigkeiten unterhalb Ma 1,0 (Ma = Mach-Zahl) zu verzögern. Der Triebwerkseinlauf ist in der Figur 1, jedoch nicht notwendigerweise, unter Ausbildung eines Winkels α angeschrägt, wobei der untere Rand gegenüber dem oberen Rand vorsteht. Dies dient dazu, im Überschallflug auftretende Verdichtungsstöße besser nach oben zu verteilen. Grundsätzlich kann der Triebwerkseinlauf jedoch auch gerade, d.h. mit einem Winkel α von 90°, oder mit einem anderen Winkel ausgebildet sein.

Der Triebwerkseinlauf 1 weist eine Innenverkleidung mit einem schallabsorbierenden Material 21 auf. Dies dient einer Reduktion des Triebwerklärms.

Der Fan 3 ist als mehrstufiger Fan ausgebildet, im dargestellten Ausführungsbeispiel als zweistufiger Fan. Dementsprechend umfasst der mehrstufige Fan 3 einen Fanrotor 31 und einen Fanstator 32, die eine erste, vordere Fanstufe bilden, sowie einen Fanrotor 33 und einen Fanstator 34a, 34b, die eine zweite, hintere Fanstufe bilden. Stromaufwärts ist der Fan 3 mit einem Nasenkonus 35 versehen. Die Fanrotoren 31, 33 umfassen jeweils eine Mehrzahl von Rotorschaufeln. Der Fanstator 32 der vorderen Fanstufe umfasst eine Mehrzahl von Statorschaufeln, die in einem schematisch dargestellten Fangehäuse 37 gelagert sind. Der Fanstator der hinteren Fanstufe ist radial gesplittet und wird durch ein Leitgitter 34a, das am Eingang des Primärstromkanals 6 ausgebildet ist, und ein Leitgitter 34b gebildet, das am Eingang des Sekundärstromkanals 5 ausgebildet ist.

Es kann vorgesehen sein, dass die Fanrotoren 31, 33 in BLISK-Bauweise ausgebildet und fest miteinander verbunden sind.

Der Strömungskanal durch den Fan 3 teilt sich hinter dem Fanrotor 33 in den Primärstromkanal 6 und den Sekundärstromkanal 5 auf. Beide Fanrotoren 31, 33 befinden sich somit stromaufwärts der Aufteilung des Strömungskanals in den Primärstromkanal 6 und den Sekundärstromkanal 5. Der Sekundärstromkanal 5 wird auch als Nebenstromkanal oder Bypass-Kanal bezeichnet.

Hinter dem Kerntriebwerk werden der Primärstrom im Primärstromkanal 6 und der Sekundärstrom im Sekundärstromkanal 5 durch den Mischer 12 vermischt. Weiter ist hinter der Turbine ein Austrittskonus 13 angebracht, um gewünschte Querschnitte des Strömungskanals zu realisieren.

Der hintere Bereich des Turbofan-Triebwerks wird durch eine Schubdüse 4 gebildet, in die ein Schubumkehrer 15 integriert ist. Die Schubdüse 4 weist einen vorderen nicht verstellbaren Bereich 41 und einen hinteren verstellbaren Bereich 42, 43 auf, wobei der hintere verstellbare Bereich sich wiederum in einen vorderen verstellbaren Teilbereich 42 und einen hinteren verstellbaren Teilbereich 43 unterteilt.

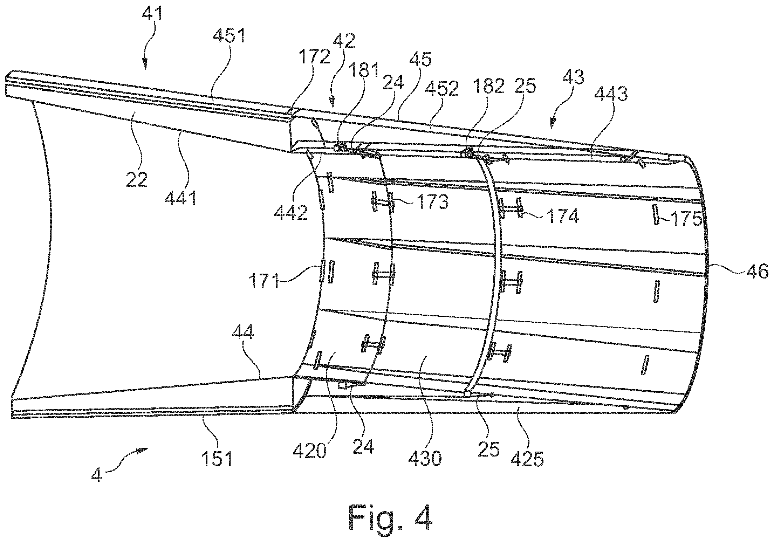

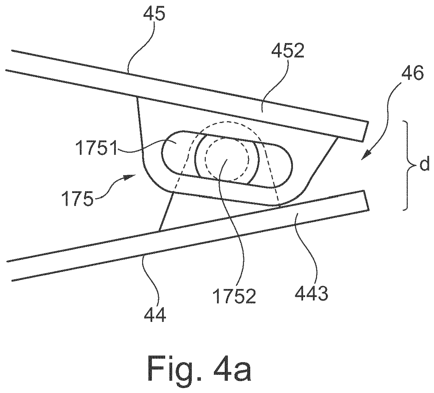

Strukturell wird die Schubdüse durch eine Innenwand 44 und eine Außenwand 45 gebildet. Dabei bildet die Innenwand 44 die Berandung des Strömungskanals 20 in der Schubdüse 4. Die Außenwand 45 ist radial außen zur Innenwand 44 ausgebildet und grenzt an die Umgebung an. Die Innenwand 44 und die Außenwand 45 laufen stromabwärts spitz aufeinander zu und bilden an ihrem stromabwärtigen Ende eine Düsenaustrittskante 46, wie anhand der Figur 4a noch erläutert werden wird.

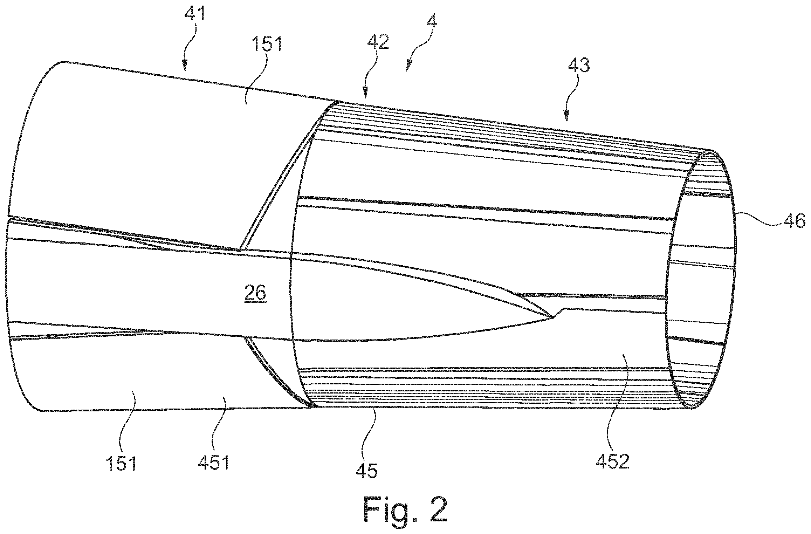

Die folgende Erläuterung nimmt zusätzlich Bezug auf die Figuren 2 bis 4, die die Schubdüse 4 der Figur 1 in vergrößerter Darstellung und in verschiedenen Ansichten zeigen. Der vordere, nicht verstellbaren Bereich 41 der Schubdüse 4 umfasst einen vorderen, nicht verstellbaren Bereich 451 der Außenwand 45 und einen vorderen, nicht verstellbaren Bereich 441 der Innenwand 41 (vgl. Figur 4). Der hintere verstellbare Bereich 42, 43 der Schubdüse 4 umfasst einen hinteren, verstellbaren Bereich 452 der Außenwand 45 und einen hinteren, verstellbaren Bereich 442, 443 der Innenwand 44, wobei der hintere, verstellbare Bereich der Innenwand einen vorderen verstellbaren Innenwandbereich 442 und einen hinteren verstellbaren Innenwandbereich 443 aufweist (vgl. Figur 4). Dabei ist der Innenwandbereich 442 im Bereich 42 und der Innenwandbereich 443 im Bereich 43 der Schubdüse 4 ausgebildet.

Der hintere verstellbare Innenwandbereich 443 ist mit dem vorderen verstellbaren Innenwandbereich 442 über Scharniergelenke 173 verbunden. Der vordere verstellbare Innenwandbereich 442 ist mit dem vorderen, nicht verstellbaren Bereich 441 der Innenwand 44 über Scharniergelenke 171 verbunden. Ebenso ist der hintere, verstellbaren Bereich 452 der Außenwand 45 und dem vorderen, nicht verstellbaren Bereich 451 der Außenwand 45 über Scharniergelenke 172 verbunden.

Wie in der Figur 1 und insbesondere der Figur 4 dargestellt, ist die Innenwand 44 im vorderen, nicht verstellbaren Bereich 441 mit einer schallabsorbierenden Auskleidung 22 versehen, die einer Lärmreduktion dient.

Die konvergent-divergente Schubdüse 4 weist eine verstellbare Düsenhalsfläche 16 und eine verstellbare Düsenaustrittsfläche 17 auf. Die Düsenhalsfläche 16 stellt die engste Querschnittsfläche des Strömungskanals durch die Schubdüse 4 dar. Sie ist am hinteren Ende des Bereichs 42 der Schubdüse 4 realisiert. Die Düsenaustrittsfläche 17 gibt die Querschnittsfläche am Düsenaustritt, d.h. an der Düsenaustrittskante 46 an.

Zur Verstellung der Düsenhalsfläche 16 und der Düsenaustrittsfläche 17 sind zwei unabhängig steuerbare Verstellmechanismen vorgesehen, die jeweils einen axial verschiebbaren Ring 181, 182 und eine Mehrzahl von Scharnieren aufweisen. Wie insbesondere in der Figur 4 dargestellt ist, ist ein vorderer Stellring 181 vorgesehen, der über Kipphebel 24 mit den Scharniergelenken 173 gekoppelt ist. Durch axiales Verschieben des Stellrings 181 kann die Düsenhalsfläche 16 verstellt werden. In entsprechender Weise ist ein hinterer Stellring 182 vorgesehen, der über Kipphebel 25 mit Scharniergelenken 174 gekoppelt ist. Durch axiales Verschieben des Stellrings 182 kann die Düsenaustrittsfläche 17 verstellt werden.

Der Figur 4 ist weiter zu entnehmen, dass der vordere verstellbare Innenwandbereich 442, der hintere verstellbare Innenwandbereich 443 und der verstellbare Bereich 452 der Außenwand 45 jeweils aus einer Vielzahl über den Umfang verteilter Segmente 420, 430, 425 besteht. Beispielsweise sind jeweils zwischen 4 und 20, insbesondere zwischen 8 und 16 über den Umfang verteilte Segmente 420, 430, 425 vorgesehen. Die Segmente 425 des hinteren Bereichs 452 der Außenwand 45 sind auch in der unteren Hälfte der Figur 1 gezeigt, in der das Triebwerk nicht geschnitten dargestellt ist.

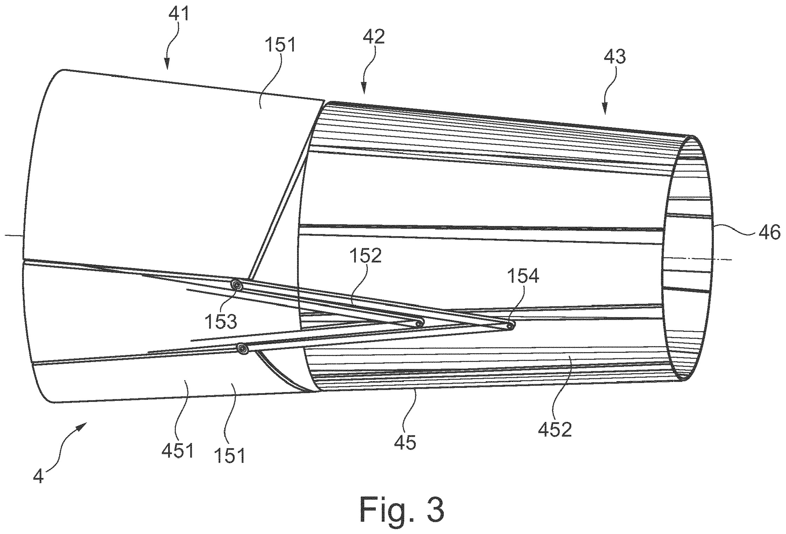

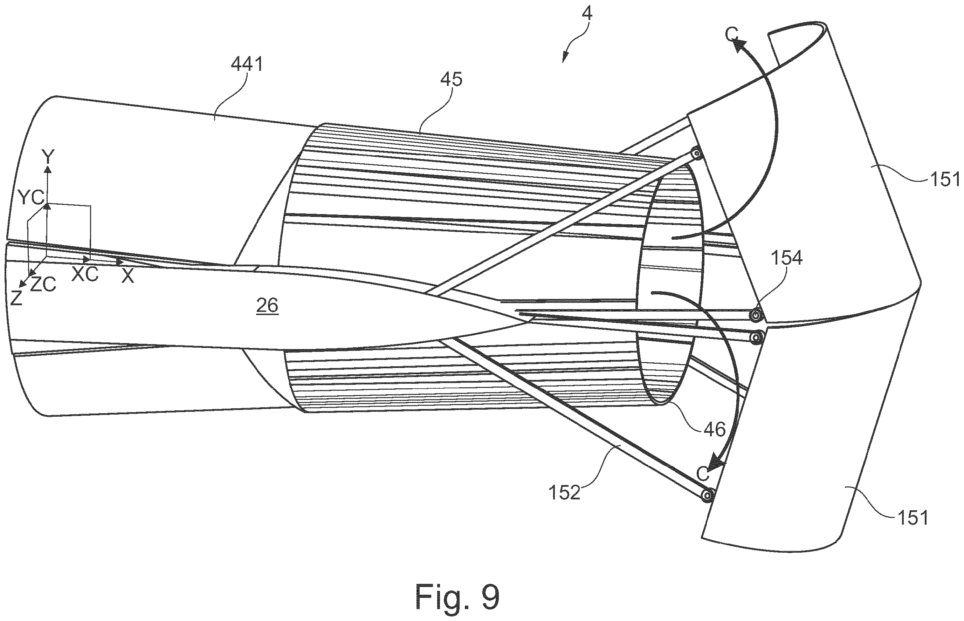

Gemäß der vorliegenden Erfindung ist in die Schubdüse 4 der Schubumkehrer 15 integriert. Der Schubumkehrer 15 umfasst zwei Schubumkehrertüren 151, die durch Abschnitte im vorderen, nicht verstellbaren Bereich 451 der Außenwand 45 ausgebildet sind. Der Schubumkehrer 15 ist in den Figuren 1 bis 4 im eingefahrenen Zustand dargestellt. Für ein Verschwenken der Schubumkehrertüren 151 sind Kipphebel 152 vorgesehen, die an Drehpunkten 153, 154 an den Schubumkehrertüren 151 und an der Schubdüse 4 gelagert sind, vgl. Figuren 1 und 3. Im ausgefahrenen Zustand, vgl. Figur 1, werden die Schubumkehrertüren 151 hinter die Düsenaustrittskante 46 geklappt und lenken die aus der Schubdüse 4 austretenden Gase entsprechend der Pfeile C um. Die Schubdüse wird dabei weiterhin im vorderen Bereich 41 durch den vorderen, nicht verstellbaren Bereich 441 der Innenwand (vgl. Figur 4) gebildet. Der ausgefahrene Zustand wird anhand der Figur 9 weitergehend erläutert werden.

Zur Figur 2 wird noch darauf hingewiesen, dass diese eine Verkleidung 26 der Kipphebel 152 zeigt, die in der Figur 3 nicht dargestellt ist.

Anhand der Figur 4a wird im Folgenden die Ausbildung der Düsenaustrittskante 46 beschrieben. An der Düsenaustrittskante 46 laufen die Innenwand 44 an ihrem hinteren verstellbaren Innenbereich 443 und die Außenwand 45 an ihrem hinteren verstellbaren Bereich 452 spitz zu. Dabei ist eine Schiebeführung 175 vorgesehen, die die beiden Wände 452, 443 beweglich miteinander verbindet. Die Schiebeführung 175 umfasst ein mit der Wand 443 verbundenes Lagerelement 1752, dass in einem mit der Wand 452 verbundenen Langloch 1751 geführt wird. Durch die Verstellbarkeit des hinteren Bereichs 452 der Außenwand 45 wird sichergestellt, dass die Innenwand 44 und die Außenwand 45 in jeder Verstellposition der Schubdüse, und damit bei allen Flugbedingungen zur Düsenaustrittskante 46 spitz zu laufen. Der radiale Abstand d zwischen den am weitesten beabstandeten Kanten der Innenwand 44 und der Außenwand 45 an der Düsenaustrittskante 46 liegt dabei in einem Bereich zwischen 5 mm und 30 mm, insbesondere in einem Bereich zwischen 10 mm und 20 mm.

Durch Bereitstellung einer spitz zulaufenden Düsenaustrittskante 46 bei jeder Flugbedingung wird eine Verwirbelung der Strömung an der Düsenaustrittskante 46 weitgehend verhindert.

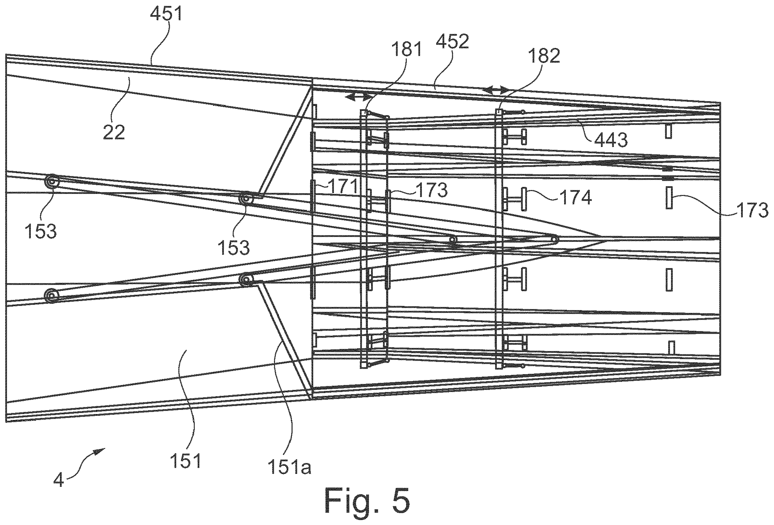

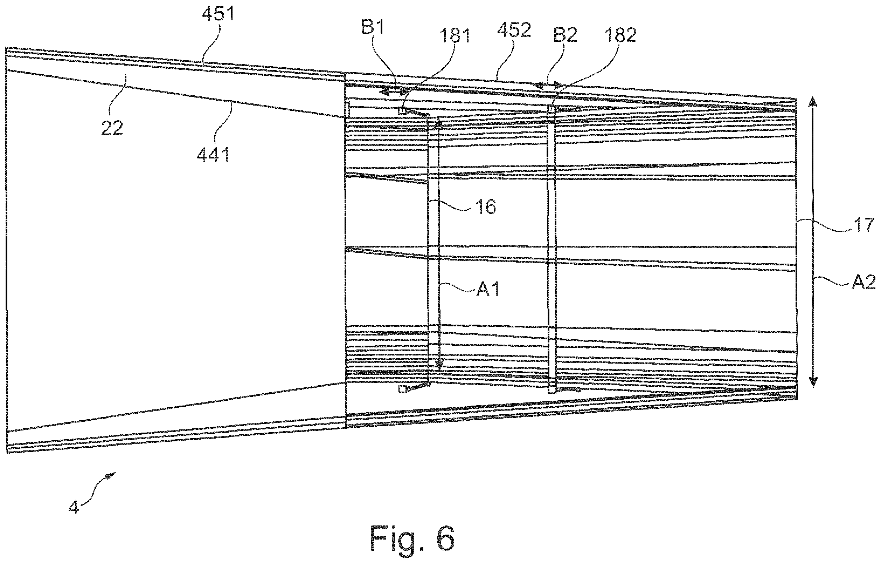

Die Figuren 5 bis 8 dienen der weitergehenden Erläuterung der in den Figuren 1 bis 4 dargestellten Schubdüse 4. Die Figur 5 zeigt zusätzlich Ränder 151a, die die Schubumkehrertüren 151 gegenüber solchen Bereichen der Außenwand 451 ausbilden, die nicht bei einem Ausfahren des Schubumkehrers verschwenkt werden. Weiter sind die bereits erläuterten Stellringe 181, 182 gut zu erkennen. Die Figur 6 zeigt zusätzlich die durch den Stellring 181 verstellbare Düsenhalsfläche 16 und die durch den Stellring 182 verstellbare Düsenaustrittsfläche 17, wobei deren Ausmaße durch die Pfeile A1 und A2 angegeben werden. Der axiale Verstellbereich der Stellringe 181, 182 wird durch die Pfeile B1, B2 angegeben. Die Figur 6 zeigt dabei eine Stellung der Stellringe 181, 182, bei der die Düsenhalsfläche 16 und die Düsenaustrittsfläche 17 maximal sind.

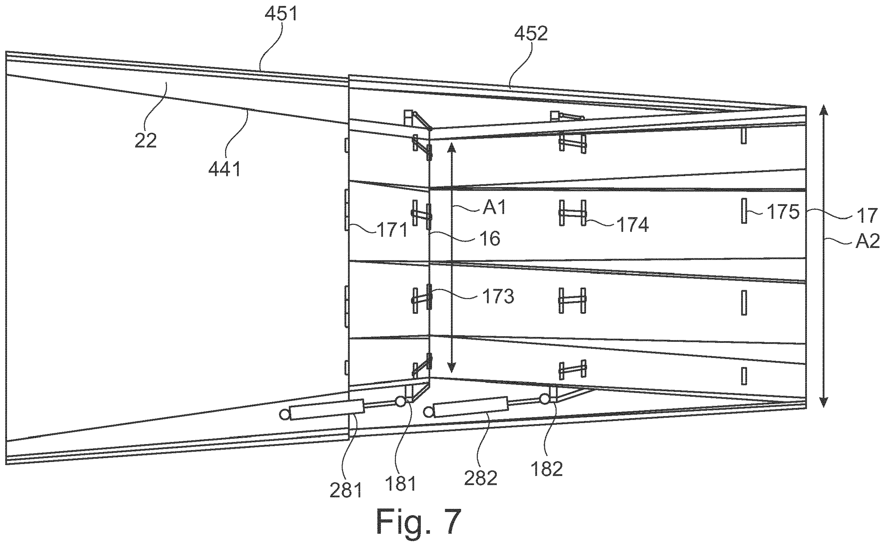

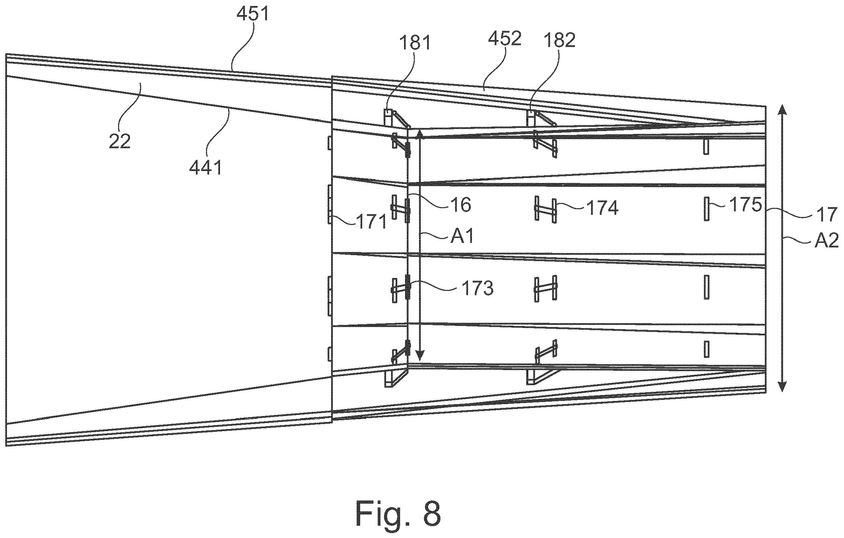

In der Darstellung der Figur 7 sind zusätzlich zwei Stellzylinder 281, 282 zum Einstellen des vorderen Stellring 181 und zum Einstellen des hinteren Stellring 182 dargestellt. Die Figur 7 zeigt dabei eine Stellung der Stellringe 181, 182, bei der die Düsenhalsfläche 16 minimal und die Düsenaustrittsfläche 17 maximal sind. Bei der Figur 8 sind die Stellringe 181, 182 derart eingestellt, dass sowohl die Düsenhalsfläche 16 als auch die Düsenaustrittsfläche 17 minimal sind.

Die Figur 9 zeigt die Schubdüse 4 mit ausgeklapptem Schubumkehrer, wobei die Schubumkehrertüren 151 hinter die Austrittskante 46 verschwenkt worden sind. Aus der Schubdüse 4 austretende Gase werden entsprechend den Pfeilen C zur Realisierung einer Schubumkehrerfunktion seitlich umgelenkt.

Im aktivierten Zustand ist in der Außenansicht der vordere, nicht verstellbare Bereich 441 der Innenwand zu erkennen, da die im eingefahrenen Zustand darüber angeordnete Außenwand, die die Schubumkehrertüren 151 bildet, weggeschwenkt worden ist.

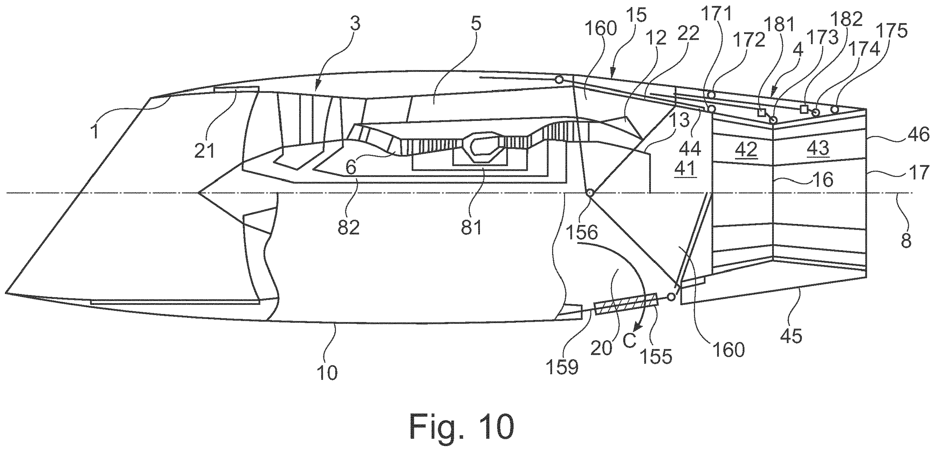

Die Figur 10 zeigt ein alternatives Ausführungsbeispiel, bei dem anders als bei den Figuren 1 bis 9 der Schubumkehrer als innenliegender Schubumkehrer 15 ausgebildet ist. Dabei unterscheidet sich das Ausführungsbeispiel der Figur 10 vom Ausführungsbeispiel der Figuren 1 bis 9 nur in der Ausgestaltung des Schubumkehrers 15. Der Aufbau der Schubdüse 4 als konvergent-divergente Schubdüse mit Innenwand 44 und Außenwand 45, mit einem vorderen, nicht verstellbaren Bereich 41 und einem hinteren, verstellbaren Bereich mit Teilbereichen 42, 43 ist unverändert, so dass insofern auf die Ausführungen zu den Figuren 1 bis 9 verwiesen wird, die in entsprechender Weise gelten. Auch der sonstige Aufbau des Triebwerks ist, abgesehen von der Ausbildung des Schubumkehrers 15, unverändert.

Beim Ausführungsbeispiel der Figur 10 bildet der Schubumkehrer 15 Schubumkehrertüren 160 aus, die um eine gemeinsame Drehachse 156 drehbar sind, die auf der Maschinenachse 8 liegt. Die Schubumkehrertüren 160 umfassen dabei Abschnitte sowohl des vorderen, nicht verstellbaren Bereichs der Außenwand 45 und des vorderen, nicht verstellbaren Bereichs der Innenwand 44. Bei Drehen der Schubumkehrertüren 160 um den Drehachse 156 werden diese derart gedreht, dass sie den Strömungskanal 20 blockieren, vgl. die untere Hälfte der Darstellung der Figur 10, so dass die Strömung gemäß dem Pfeil C seitlich umgelenkt wird. Dabei kann vorgesehen sein, dass die Schubumkehrertüren 160 zusätzlich mit einem Leitgitter 155 zum Umlenken der Strömung gemäß den Pfeilen C versehen sind. Die Schubumkehrertüren 160 können dabei beispielsweise durch Koppelstangen 159 betätigt werden.

Die Innenwand 44 ist im vorderen, nicht verstellbaren Bereich mit einem schallabsorbierenden Material versehen.

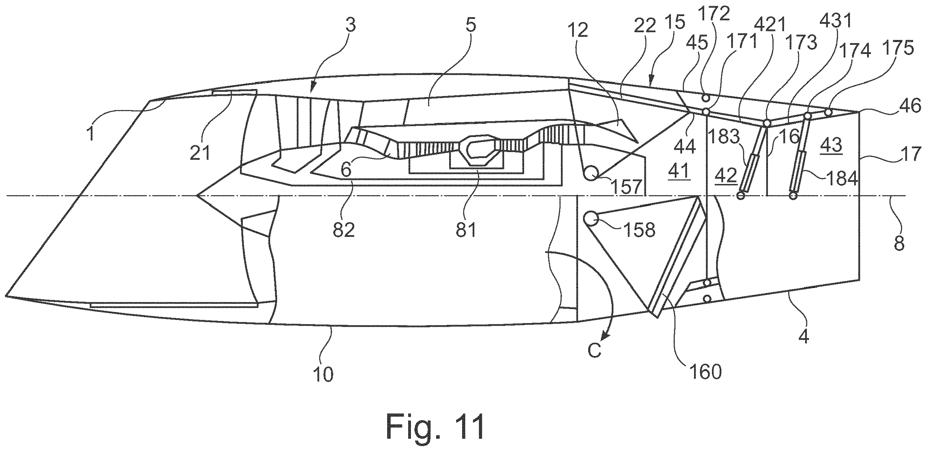

Das Ausführungsbeispiel der Figur 11 zeigt ebenfalls eine Schubdüse 4 mit einem innenliegenden Schubumkehrer 15. Es bestehen zwei Unterschiede zum Ausführungsbeispiel der Figur 10. Zum einen rotieren die beiden Schubumkehrertüren 160 nicht um eine gemeinsame Drehachse, sondern jeweils um eine eigene Drehachse 157, 158, die beide nicht auf der Maschinenachse 8 liegen.

Zum anderen liegt ein anderer Aufbau der konvergent-divergenten Düse vor. Diese weist zumindest in den verstellbaren Teilbereichen 42, 43 einen rechteckigen Querschnitt auf. Dementsprechend bildet sie in den Teilbereichen 42, 43 zwei Seitenwände, eine obere Wand und eine untere Wand aus, die zumindest im Verstellbereich der verstellbaren Teilbereiche 42, 43 jeweils plan ausgebildet sind. Nur die obere und die untere Wand sind verstellbar. Die Seitenwände sind nicht verstellbar. Die obere Wand weist im vorderen, verstellbaren Teilbereich 42 ein ebenes oberes Segment 421 und im hinteren, verstellbaren Teilbereich 43 ein ebenes oberes Segment 431 auf. In entsprechender Weise weist die untere Wand im vorderen, verstellbaren Teilbereich 42 ein ebenes unteres Segment und im hinteren verstellbaren Teilbereich 43 ein ebenes unteres Segment auf, die in der teilweise geschnittenen Ansicht der Figur 11 nicht zu sehen sind. Somit weisen der vordere, verstellbare Teilbereich 42 und der hintere, verstellbare Teilbereich 43 jeweils ein ebenes oberes verstellbares Segment 421, 431 und ein ebenes unteres verstellbares Segment auf. Die Segmente 421, 431 können dabei neben der Innenwand 44 der Schubdüse auch die Außenwand 45 der Schubdüse umfassen.

Für eine Verstellung der Düsenhalsfläche 16 werden das ebene obere Segment 421 und das entsprechende ebene untere Segment in der vertikalen Richtung aufeinander zu oder voreinander weg bewegt. Für eine Verstellung der Düsenaustrittsfläche 17 werden das ebene obere Segment 431 und das entsprechende ebene untere Segment in der vertikalen Richtung aufeinander zu oder voreinander weg bewegt. Hierfür sind Verstellaktuatoren 183, 184 vorgesehen, die beispielsweise als Stellzylinder ausgebildet sind.

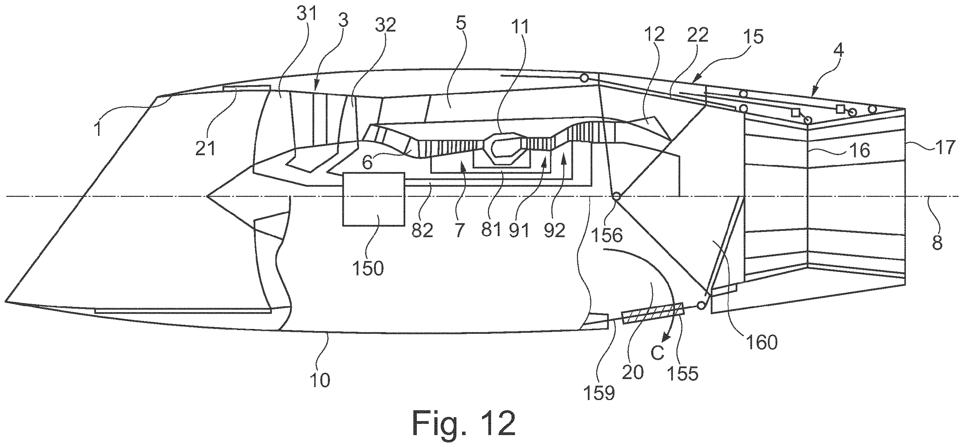

Die Figur 12 zeigt ein Ausführungsbeispiel, das auf dem Ausführungsbeispiel der Figur 10 basiert, jedoch auch auf jedem anderen der dargestellten Ausführungsbeispiele basieren könnte. Bei der Figur 12 ist zusätzlich ein Untersetzungsgetriebe 150 vorgesehen, dass die Niederdruckwelle 82 mit dem Fan 3 koppelt. Das Untersetzungsgetriebe ist beispielsweise als Planetengetriebe ausgeführt und führt zu einer Reduktion der Fandrehzahl, indem die Drehzahl der schnelllaufenden Niederdruckturbine 92 bzw. der Niederdruckwelle 82 auf den mehrstufigen Fan 3 untersetzt wird.

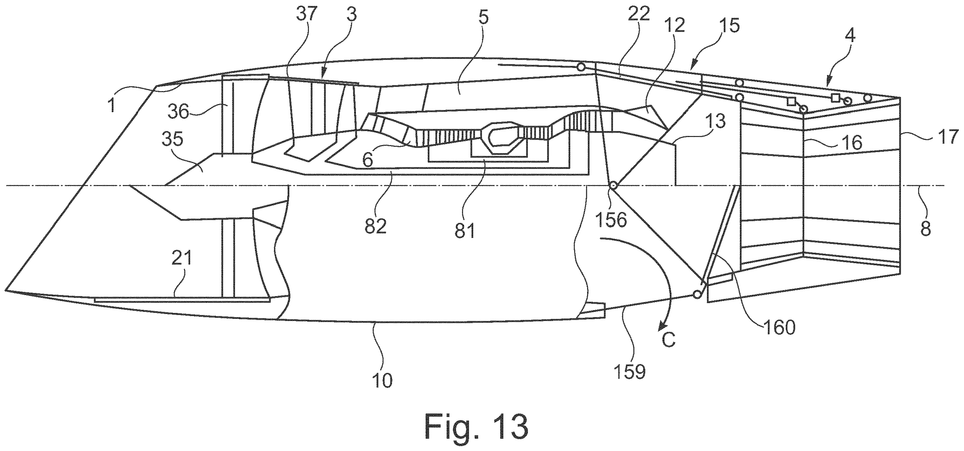

Die Figur 13 zeigt eine Ausführungsvariante, bei der der Nasenkonus 35 in axialer Richtung verstellbar ausgebildet ist. In der Figur 13 sind dabei zwei unterschiedliche axiale Positionen dargestellt, eine Position, in der der Nasenkonus 35 eingefahren ist und eine Position, der der Nasenkonus 35 ausgefahren ist. Der verschiebbare Nasenkonus 35 wird dabei über eine radiale Struktur 36 abgestürzt, die sich axial vor dem Fanrotor 3 befindet und die sich ihrerseits am Triebwerkseinlauf 1 oder am Fangehäuse 37 abstützt. Der Nasenkonus 35 wird bei hohen Geschwindigkeiten, insbesondere solchen über Ma 1,5 ausgefahren.

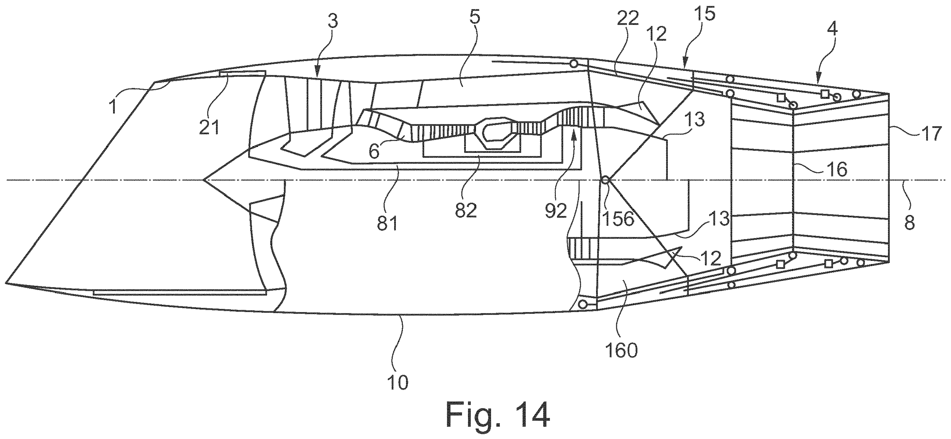

Die Figur 14 zeigt eine Ausführungsvariante, bei der der Mischer 12 und der Austrittskonus 13 in axialer Richtung längsverschiebbar sind. Die obere Hälfte der Figur 14 zeigt den Mischer 12 und den Austrittskonus 13 im eingefahrenen Zustand. Die untere Hälfte der Figur 14 zeigt den Mischer 12 und den Austrittskonus 13 im ausgefahrenen Zustand. Zum Verfahren dieser Komponenten können beispielsweise nicht dargestellte Zylinder vorgesehen sein, die außerhalb der Niederdruckturbine 92 angeordnet und beispielsweise mittels Kipphebeln verstellbar sind. Es ist vorgesehen, dass der Mischer 12 und der Austrittskonus 13 bei Schallgeschwindigkeit vollständig ausgefahren sind.

Die Ausführungsbeispiele der Figuren 13 und 14 basieren ebenfalls auf dem Ausführungsbeispiel der Figur 10. Ein verstellbarer Nasenkonus 35 bzw. ein verstellbarer Mischer 12 und Austrittskonus 13 können jedoch auch bei jedem anderen Ausführungsbeispiel realisiert sein.

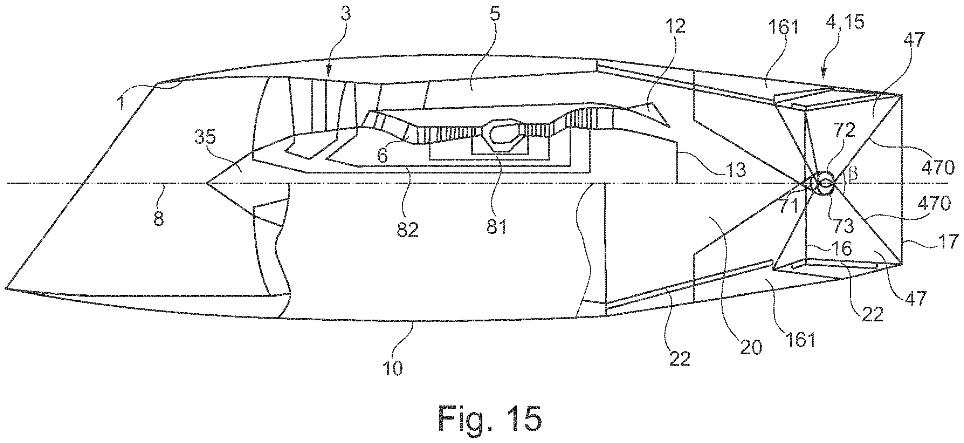

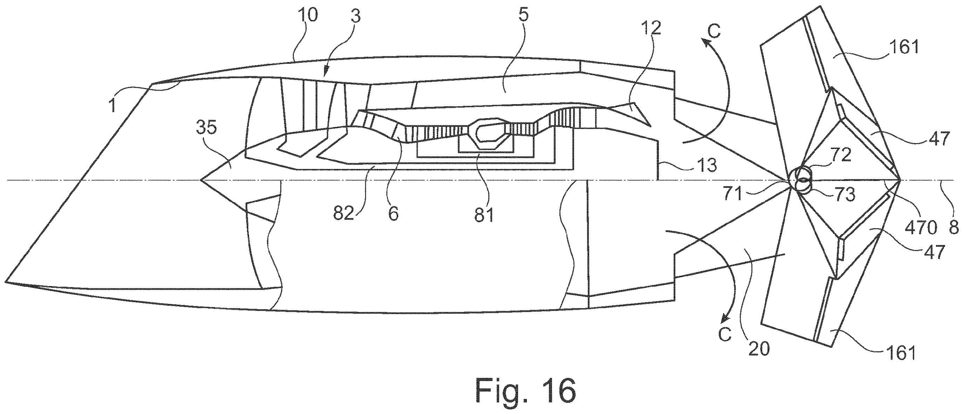

Die Figuren 15 und 16 zeigen ein nicht die Erfindung betreffendes Beispiel, das sich von den bisher erläuterten Ausführungsbeispielen dadurch unterscheidet, das auch der hintere Bereich der Düse 4, der eine Einstellung der Düsenhalsfläche 16 und der Düsenaustrittsfläche 17 ermöglicht, an einer Kippbewegung bei Ausfahren des Schubumkehrers 15 teilnimmt.

Die Schubdüse 4 bzw. der Schubumkehrer 15 umfassen zwei drehbare Schubumkehrertüren 161 und zwei drehbare hintere Düsenabschnitte 47. Die Lagerung dieser Teile erfolgt über drei Exzenter 71, 72, 73. Der Exzenter 71 umfasst einen großen Exzenterkreis und stellt eine Drehachse für beide Schubumkehrertüren 161 und beide Düsenabschnitte 47 bereit. Die beiden Exzenter 72, 73 besitzen jeweils einen kleineren Exzenterkreis, der in dem großen Exzenterkreis liegt und dienen einer Lagerung jeweils eines der Düsenabschnitte 47.

Die Düsenabschnitte 47 können zum einen verkippt werden, wodurch die Düsenaustrittsfläche 17 einstellbar ist. Die Düsenabschnitte 47 können des Weiteren über den jeweiligen Exzenter 72, 73 nach außen bewegt werden, wodurch die Düsenhalsfläche 16 einstellbar ist. Wie in der Figur 16 dargestellt, sind sowohl die beiden Schubumkehrertüren 161 als auch die beiden Düsenabschnitte 47 des Weiteren um die durch den Exzenter 71 bereitgestellte Achse insgesamt verschwenkbar, wobei bei ausgefahrenem Schubumkehrer der Strömungskanal 20 blockiert und die Heißgase entsprechend den Pfeilen C umgelenkt werden.

Damit die beiden Düsenabschnitte 47 gemäß der Figur 16 verschwenken können, ist es erforderlich, dass ihre Austrittskanten geeignet zueinander verlaufen. Im eingefahrenen Zustand des Schubumkehrers 15 sind die Austrittskanten 470 der Düsenabschnitte 47 - in der Seitenansicht der Figur 15 - in einem Winkel β zueinander angeordnet. Bei Ausfahren des Schubumkehrers 15 und Verschwenken der Düsenabschnitte 47 kommen die Austrittskanten 470 in Anlage und schließen dabei den Strömungskanal 20, vgl. Figur 16.

Die dem Strömungskanal 20 zugewandten Flächen von Schubumkehrer 15 und Verstelldüse 4 sind mit einem schallabsorbierenden Material 22 ausgekleidet.

Das Turbofan-Triebwerk ist in sämtlichen Ausgestaltungen der Erfindung derart ausgebildet, dass es einen vergleichsweise geringen Luftwiderstand besitzt. Hierzu weist es einen kreisförmigen oder näherungsweise kreisförmigen Querschnitt auf. Auch besitzt es keine lokalen Verdickungen, die der Aufnahme eines Hilfsgeräteträgers oder von Hilfsgeräten dienen. So ist vorgesehen, dass ein Hilfsgeräteträger und entsprechende Hilfsgeräte vollständig oder zumindest weitgehend aus dem Triebwerk ausgelagert und in den Pylon, der das Triebwerk mit dem Flugzeugrumpf verbindet, und/oder den Flugzeugrumpf integriert sind.

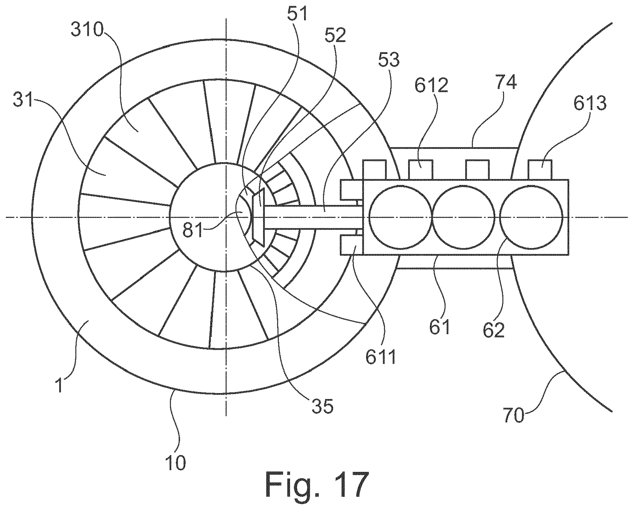

Ein entsprechendes Ausführungsbeispiel zeigt die Figur 17, die das Triebwerk in einer teilweise geschnittenen Ansicht von vorne zeigt. Vom Turbofan-Triebwerk sind die Triebwerksgondel 10, der Triebwerkseinlauf 1, der Nasenkonus 35 und der vorderste Fanrotor 31 des mehrstufigen Fans zu erkennen, wobei Fanschaufeln 310 des Fanrotors 31 dargestellt sind. Die Triebwerksgondel 10 weist einen kreisförmigen Querschnitt auf. Das Triebwerk ist über einen Pylon 74 mit dem Flugzeugrumpf 70 verbunden. Ein Hilfsgeräteträger 61, der dem Antrieb und der Lagerung einer Mehrzahl von Hilfsgeräten 62 dient, ist im Pylon 74 und im Flugzeugrumpf 70 angeordnet und befestigt. So weist der Hilfsgeräteträger 61 Halterungen 611 zum Triebwerk, Halterungen 612 im Pylon 74 und Halterungen 613 im Flugzeugrumpf 70 auf. Die Hilfsgeräte 62 sind im Pylon 74 und/oder im Flugzeugrumpf 70 angeordnet.

Zum Antrieb des Hilfsgeräteträgers 61 ist dieser in an sich bekannter Weise über eine radiale Abtriebswelle 53, ein Kegelrad 52 auf der radialen Abtriebswelle 53 und ein Kegelrad 51 mit der Hochdruckwelle 81 des Triebwerks gekoppelt.

Die beschriebene Anordnung erlaubt die Ausführung einer schlanken, kreissymmetrischen Gondel mit reduziertem Luftwiderstand.

Die vorliegende Erfindung beschränkt sich in ihrer Ausgestaltung nicht auf die vorstehend beschriebenen Ausführungsbeispiele, die lediglich beispielhaft zu verstehen sind. Beispielsweise ist die Art der Verstellbarkeit der verstellbaren konvergent-divergente Schubdüse nur beispielhaft zu verstehen.

Des Weiteren wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

## Patentansprüche

1. Turbofan-Triebwerk für ein ziviles Überschallflugzeug, das aufweist:
- einen Triebwerkseinlauf (1), der dazu vorgesehen und ausgebildet ist, im Überschallflug die einströmende Luft auf Geschwindigkeiten unterhalb der Schallgeschwindigkeit zu verzögern,
- einen mehrstufigen Fan (3), der hinter dem Triebwerkseinlauf (1) angeordnet ist,
- ein Kerntriebwerk, das einen Verdichter (7), eine Brennkammer (11) und eine Turbine (91, 92) umfasst,
- einen Primärstromkanal (6), der durch das Kerntriebwerk führt,
- einen Sekundärstromkanal (5), der am Kerntriebwerk vorbei führt,
- eine verstellbare konvergent-divergente Schubdüse (4), die eine Düsenhalsfläche (16) und eine Düsenaustrittsfläche (17) ausbildet, wobei zumindest die Düsenhalsfläche (16) verstellbar ist,
- wobei die Schubdüse (4) einen vorderen, stromaufwärtigen nicht verstellbaren Bereich (41) und einen hinteren, stromabwärtigen verstellbaren Bereich (42, 43) aufweist, und
- einen Schubumkehrertüren (151, 160) aufweisenden Schubumkehrer (15), der in die verstellbare konvergent-divergente Schubdüse (4) integriert ist,
**dadurch gekennzeichnet,**
**dass** der Schubumkehrer (15) einschließlich der Schubumkehrertüren (151, 160), die im Falle einer Schubumkehr den Gasstrom umlenken, in den vorderen, nicht verstellbaren Bereich (41) der Schubdüse (4) integriert ist.

2. Turbofan-Triebwerk nach Anspruch 1, **dadurch gekennzeichnet, dass** der hintere, stromabwärtige verstellbare Bereich (42, 43) der Schubdüse (4) einen vorderen, verstellbaren Teilbereich (42) und einen hinteren, verstellbaren Teilbereich (43) umfasst.

3. Turbofan-Triebwerk nach Anspruch 2, **dadurch gekennzeichnet, dass** die Schubdüse (41) eine Innenwand (44) und eine Außenwand (45) umfasst, wobei der vordere, stromaufwärtige nicht verstellbaren Bereich (41) der Schubdüse einen vorderen, nicht verstellbaren Bereich (451) der Außenwand (45) und einen vorderen, nicht verstellbaren Bereich (441) der Innenwand (41) umfasst, wobei der hintere, stromabwärtige verstellbare Bereich (42, 43) der Schubdüse einen hinteren, verstellbaren Bereich (452) der Außenwand (45) und einen hinteren, verstellbaren Bereich (442, 443) der Innenwand (44) umfasst, und wobei der hintere, verstellbare Bereich der Innenwand einen vorderen verstellbaren Innenwandbereich (442) und einen hinteren verstellbaren Innenwandbereich (443) aufweist.

4. Turbofan-Triebwerk nach Anspruch 3, **dadurch gekennzeichnet, dass** die Schubdüse (41) im vorderen, nicht verstellbaren Bereich (441) der Innenwand (44) mit einer schallabsorbierenden Auskleidung (22) versehen ist und/oder der Triebwerkseinlauf (1) mit einer schallabsorbierenden (21) Auskleidung versehen ist.

5. Turbofan-Triebwerk nach Anspruch 3 oder 4, **gekennzeichnet durch** zwei unabhängig steuerbare Verstellmechanismen, die axial verschiebbare Ringe (181, 182) umfassen und dazu vorgesehen und ausgebildet sind, die Austrittsfläche des vorderen verstellbaren Innenwandbereichs (442), die die Düsenhalsfläche (16) bildet, und die Austrittsfläche des hinteren verstellbaren Innenwandbereichs (443), die die Düsenaustrittsfläche (17) bildet, zu verstellen, wobei der vordere verstellbare Innenwandbereich (442), der hintere verstellbare Innenwandbereich (443) und der verstellbare Bereich (452) der Außenwand (45) jeweils aus einer Vielzahl über den Umfang verteilter Segmente (420, 430, 425) bestehen.

6. Turbofan-Triebwerk nach einem der Ansprüche 2 bis 4, **dadurch gekennzeichnet, dass** der vordere, verstellbare Teilbereich (42) und der hintere, verstellbare Teilbereich (43) der Schubdüse (4) im Querschnitt rechteckig ausgebildet sind und jeweils ein ebenes oberes verstellbares Segment (421, 431) und ein ebenes unteres verstellbares Segment aufweisen, wobei das ebene obere Segment (421) und das ebene untere Segment des vorderen, verstellbaren Teilbereichs (42) sowie das ebene obere Segment (431) und das ebene untere Segment des hinteren, verstellbaren Teilbereichs (43) für eine Verstellbarkeit der Schubdüse (4) in vertikaler Richtung aufeinander zu oder voneinander weg bewegbar sind.

7. Turbofan-Triebwerk nach einem der Ansprüche 3 bis 6, **dadurch gekennzeichnet, dass** die Innenwand (44) und die Außenwand (45) in jeder Verstellposition der Schubdüse (4) an der Düsenaustrittskante (46) spitz zulaufen.

8. Turbofan-Triebwerk nach Anspruch 7, **dadurch gekennzeichnet, dass** die Innenwand (44) und die Außenwand (45) der Schubdüse (4) durch Schiebeführungen (175) miteinander verbunden sind, die sicherstellen, dass die Innenwand (44) und die Außenwand (45) in jeder Verstellposition der Schubdüse an der Düsenaustrittskante (46) spitz zulaufen.

9. Turbofan-Triebwerk nach Anspruch 7 oder 8, **dadurch gekennzeichnet, dass** die Innenwand (44) und die Außenwand (45) der Schubdüse (4) an der Düsenaustrittskante (46) einen radialen Abstand aufweisen, der im Bereich zwischen 5 mm und 30 mm, insbesondere im Bereich zwischen 10 mm und 20 mm liegt.

10. Turbofan-Triebwerk nach einem der vorangehenden Ansprüche, **dadurch gekennzeichnet, dass** der Schubumkehrer (15) als außenliegender Schubumkehrer ausgebildet ist oder als innenliegender Schubumkehrer ausgebildet ist.

11. Turbofan-Triebwerk nach Anspruch 10, soweit rückbezogen auf Anspruch 3, **dadurch gekennzeichnet, dass** der Schubumkehrer (15) als außenliegender Schubumkehrer ausgebildet ist und der Schubumkehrer (15) verschwenkbare Schubumkehrertüren (151) aufweist, die durch den vorderen nicht verstellbaren Bereich (451) der Außenwand (45) gebildet sind.

12. Turbofan-Triebwerk nach Anspruch 10, soweit rückbezogen auf Anspruch 3, **dadurch gekennzeichnet, dass** der Schubumkehrer (15) als innenliegender Schubumkehrer ausgebildet ist und der Schubumkehrer (15) drehbare Schubumkehrertüren (160) aufweist, die durch die Innenwand (441) und die Außenwand (451) des vorderen, nicht verstellbaren Bereichs (41) der Schubdüse (4) gebildet sind.

13. Turbofan-Triebwerk nach einem der vorangehenden Ansprüche, **dadurch gekennzeichnet, dass** das Turbofan-Triebwerk in einer Triebwerks-Gondel (10) mit kreisförmigem oder näherungsweise kreisförmigem Querschnitt angeordnet ist und die Triebwerks-Gondel (10) keine lokalen Verdickungen für Getriebe und/oder Nebenaggregate aufweist.

14. Turbofan-Triebwerk nach einem der vorangehenden Ansprüche, **dadurch gekennzeichnet, dass** ein stromaufwärts des mehrstufigen Fans (3) angeordneter Nasenkonus (35) in axialer Richtung verschiebbar ausgebildet ist und/oder ein hinter der Niederdruckturbine (92) angeordneter Mischer (12) vorgesehen ist, der Luft des Primärstromkanals (6) und Luft des Sekundärstromkanals (5) mischt, wobei der Mischer (12) und/oder ein Austrittskonus (13) des Triebwerks axial verschiebbar ausgebildet sind.

15. Turbofan-Triebwerk nach einem der vorangehenden Ansprüche, **dadurch gekennzeichnet, dass** für mindestens einen Fanrotor oder Fanstator gilt, dass in der radialen Strömungsmitte (43) des Strömungskanals durch den Fan der axiale Abstand zwischen den Schaufeln eines Fanrotors (31, 33) oder Fanstators (32) und den Schaufeln des in Strömungsrichtung unmittelbar stromaufwärts angeordneten Fanstators (32) oder Fanrotors (31) zwischen 60% und 150%, insbesondere zwischen 80% und 130% der axialen Länge der Schaufeln des stromaufwärts angeordneten Fanstators (32) oder Fanrotors (31) beträgt.

## Claims

1. Turbofan engine for a civil supersonic aircraft, which turbofan engine has:
- an engine inlet (1) which is provided and configured to slow down the incoming air during supersonic flight to speeds below the speed of sound,
- a multiple-stage fan (3) which is arranged behind the engine inlet (1),
- a core engine which comprises a compressor (7), a combustion chamber (11) and a turbine (91, 92),
- a primary flow duct (6) which leads through the core engine,
- a secondary flow duct (5) which leads past the core engine,
- an adjustable convergent-divergent thrust nozzle (4) which configures a nozzle throat area (16) and a nozzle outlet area (17), at least the nozzle throat area (16) being adjustable,
- the thrust nozzle (4) having a front, upstream non-adjustable region (41) and a rear, downstream adjustable region (42, 43), and
- a thrust reverser (15) which has thrust reverser doors (151, 160) and is integrated into the adjustable convergent-divergent thrust nozzle (4),
**characterized in that**
the thrust reverser (15) including the thrust reverser doors (151, 160) which deflect the gas stream in the case of a thrust reversal is integrated into the front, non-adjustable region (41) of the thrust nozzle (4).

2. Turbofan engine according to Claim 1, **characterized in that** the rear, downstream adjustable region (42, 43) of the thrust nozzle (4) comprises a front, adjustable part region (42) and a rear, adjustable part region (43).

3. Turbofan engine according to Claim 2, **characterized in that** the thrust nozzle (41) comprises an inner wall (44) and an outer wall (45), the front, upstream non-adjustable region (41) of the thrust nozzle comprising a front, non-adjustable region (451) of the outer wall (45) and a front, non-adjustable region (441) of the inner wall (41), the rear, downstream adjustable region (42, 43) of the thrust nozzle comprising a rear, adjustable region (452) of the outer wall (45) and a rear, adjustable region (442, 443) of the inner wall (44), and the rear, adjustable region of the inner wall having a front adjustable inner wall region (442) and a rear adjustable inner wall region (443).

4. Turbofan engine according to Claim 3, **characterized in that** the thrust nozzle (41) is provided in the front, non-adjustable region (441) of the inner wall (44) with a sound-absorbing trim panel (22), and/or the engine inlet (1) is provided with a sound-absorbing trim panel (21) .

5. Turbofan engine according to Claim 3 or 4, **characterized by** two independently controllable adjusting mechanisms which comprise axially displaceable rings (181, 182) and are provided and configured to adjust the outlet area of the front adjustable inner wall region (442), which outlet area forms the nozzle throat area (16), and to adjust the outlet area of the rear adjustable inner wall region (443), which outlet area forms the nozzle outlet area (17), the front adjustable inner wall region (442), the rear adjustable inner wall region (443) and the adjustable region (452) of the outer wall (45) consisting in each case of a multiplicity of segments (420, 430, 425) which are distributed over the circumference.

6. Turbofan engine according to one of Claims 2 to 4, **characterized in that** the front, adjustable part region (42) and the rear, adjustable part region (43) of the thrust nozzle (4) are of rectangular configuration in cross section and in each case have a planar upper adjustable segment (421, 431) and a planar lower adjustable segment, it being possible for the planar upper segment (421) and the planar lower segment of the front, adjustable part region (42) and the planar upper segment (431) and the planar lower segment of the rear, adjustable part region (43) to be moved towards one another or away from one another for an adjustability of the thrust nozzle (4) in the vertical direction.

7. Turbofan engine according to one of Claims 3 to 6, **characterized in that** the inner wall (44) and the outer wall (45) taper acutely at the nozzle outlet edge (46) in every adjusting position of the thrust nozzle (4).

8. Turbofan engine according to Claim 7, **characterized in that** the inner wall (44) and the outer wall (45) of the thrust nozzle (4) are connected to one another by way of sliding guides (175) which ensure that the inner wall (44) and the outer wall (45) taper acutely at the nozzle outlet edge (46) in every adjusting position of the thrust nozzle.

9. Turbofan engine according to Claim 7 or 8, **characterized in that** the inner wall (44) and the outer wall (45) of the thrust nozzle (4) are at a radial spacing at the nozzle outlet edge (46), which radial spacing lies in the range between 5 mm and 30 mm, in particular in the range between 10 mm and 20 mm.

10. Turbofan engine according to one of the preceding claims, **characterized in that** the thrust reverser (15) is configured as an external thrust reverser or is configured as an internal thrust reverser.

11. Turbofan engine according to Claim 10, in so far as it refers back to Claim 3, **characterized in that** the thrust reverser (15) is configured as an external thrust reverser, and the thrust reverser (15) has pivotable thrust reverser doors (151) which are formed by way of the front non-adjustable region (451) of the outer wall (45) .

12. Turbofan engine according to Claim 10, in so far as it refers back to Claim 3, **characterized in that** the thrust reverser (15) is configured as an internal thrust reverser, and the thrust reverser (15) has rotatable thrust reverser doors (160) which are formed by way of the inner wall (441) and the outer wall (451) of the front, non-adjustable region (41) of the thrust nozzle (4) .

13. Turbofan engine according to one of the preceding claims, **characterized in that** the turbofan engine is arranged in an engine nacelle (10) with a circular or approximately circular cross section, and the engine nacelle (10) does not have any local thickened portions for transmissions and/or ancillary units.

14. Turbofan engine according to one of the preceding claims, **characterized in that** a nose cone (35) which is arranged upstream of the multiple-stage fan (3) is configured such that it can be displaced in the axial direction, and/or a mixer (12) which is arranged behind the low pressure turbine (92) is provided, which mixer (12) mixes air of the primary flow duct (6) and air of the secondary flow duct (5), the mixer (12) and/or an outlet cone (13) of the engine being of axially displaceable configuration.

15. Turbofan engine according to one of the preceding claims, **characterized in that** it applies for at least one fan rotor or fan stator that, in the radial flow centre (43) of the flow duct through the fan, the axial spacing between the blades of a fan rotor (31, 33) or fan stator (32) and the blades of the fan stator (32) or fan rotor (31) which is arranged directly upstream in the flow direction is between 60% and 150%, in particular between 80% and 130% of the axial length of the blades of the fan stator (32) or fan rotor (31) which is arranged upstream.

## Revendications

1. Moteur à turbosoufflante pour un avion supersonique civil, qui comprend :
- une entrée de moteur (1), qui est prévue et configurée pour, en vol supersonique, ralentir l'air entrant à des vitesses inférieures à la vitesse du son,
- une soufflante à plusieurs niveaux (3), qui est agencée derrière l'entrée de moteur (1),
- un moteur central, qui comprend un compresseur (7), une chambre de combustion (11) et une turbine (91, 92),
- un canal d'écoulement primaire (6), qui traverse le moteur central,
- un canal d'écoulement secondaire (5), qui passe à côté du moteur central,
- une tuyère d'éjection convergente-divergente ajustable (4), qui forme une surface d'encolure de tuyère (16) et une surface de sortie de tuyère (17), au moins la surface d'encolure de tuyère (16) étant ajustable,
- la tuyère d'éjection (4) comprenant une zone avant en amont non ajustable (41) et une zone arrière en aval ajustable (42, 43), et
- un inverseur de poussée (15) comprenant des portes d'inverseur de poussée (151, 160), qui est intégré dans la tuyère d'éjection convergente-divergente ajustable (4),
**caractérisé en ce que**
l'inverseur de poussée (15), y compris les portes d'inverseur de poussée (151, 160), qui dévient le courant gazeux en cas d'inversion de poussée, est intégré dans la zone avant non ajustable (41) de la tuyère d'éjection (4).

2. Moteur à turbosoufflante selon la revendication 1, **caractérisé en ce que** la zone arrière en aval ajustable (42, 43) de la tuyère d'éjection (4) comprend une zone partielle avant ajustable (42) et une zone partielle arrière ajustable (43).

3. Moteur à turbosoufflante selon la revendication 2, **caractérisé en ce que** la tuyère d'éjection (41) comprend une paroi intérieure (44) et une paroi extérieure (45), la zone avant en amont non ajustable (41) de la tuyère d'éjection comprenant une zone avant non ajustable (451) de la paroi extérieure (45) et une zone avant non ajustable (441) de la paroi intérieure (41), la zone arrière en aval ajustable (42, 43) de la tuyère d'éjection comprenant une zone arrière ajustable (452) de la paroi extérieure (45) et une zone arrière ajustable (442, 443) de la paroi intérieure (44), et la zone arrière ajustable de la paroi intérieure comprenant une zone de paroi intérieure avant ajustable (442) et une zone de paroi intérieure arrière ajustable (443) .

4. Moteur à turbosoufflante selon la revendication 3, **caractérisé en ce que** la tuyère d'éjection (41) est munie d'un habillage absorbant le son (22) dans la zone avant non ajustable (441) de la paroi intérieure (44) et/ou l'entrée de moteur (1) est munie d'un habillage absorbant le son (21).

5. Moteur à turbosoufflante selon la revendication 3 ou 4, **caractérisé par** deux mécanismes d'ajustement contrôlables indépendamment, qui comprennent des anneaux déplaçables axialement (181, 182) et sont prévus et configurés pour ajuster la surface de sortie de la zone de paroi intérieure avant ajustable (442), qui forme la surface d'encolure de tuyère (16), et la surface de sortie de la zone de paroi intérieure arrière ajustable (443), qui forme la surface de sortie de tuyère (17), la zone de paroi intérieure avant ajustable (442), la zone de paroi intérieure arrière ajustable (443) et la zone ajustable (452) de la paroi extérieure (45) étant chacune constituées par une pluralité de segments (420, 430, 425) répartis sur la périphérie.

6. Moteur à turbosoufflante selon l'une quelconque des revendications 2 à 4, **caractérisé en ce que** la zone partielle avant ajustable (42) et la zone partielle arrière ajustable (43) de la tuyère d'éjection (4) sont configurées sous forme rectangulaire dans la section transversale, et comprennent chacune un segment ajustable supérieur plan (421, 431) et un segment ajustable inférieur plan, le segment supérieur plan (421) et le segment inférieur plan de la zone partielle ajustable avant (42), ainsi que le segment supérieur plan (431) et le segment inférieur plan de la zone partielle ajustable arrière (43) pouvant être rapprochés les uns des autres ou éloignés les uns des autres dans la direction verticale pour l'ajustabilité de la tuyère d'éjection (4).

7. Moteur à turbosoufflante selon l'une quelconque des revendications 3 à 6, **caractérisé en ce que** la paroi intérieure (44) et la paroi extérieure (45) s'effilent à chaque position d'ajustement de la tuyère d'éjection (4) sur le bord de sortie de tuyère (46).

8. Moteur à turbosoufflante selon la revendication 7, **caractérisé en ce que** la paroi intérieure (44) et la paroi extérieure (45) de la tuyère d'éjection (4) sont reliées l'une à l'autre par des coulisses (175), qui assurent que la paroi intérieure (44) et la paroi extérieure (45) s'effilent à chaque position d'ajustement de la tuyère d'éjection sur le bord de sortie de tuyère (46).

9. Moteur à turbosoufflante selon la revendication 7 ou 8, **caractérisé en ce que** la paroi intérieure (44) et la paroi extérieure (45) de la tuyère d'éjection (4) présentent un écart radial sur le bord de sortie de tuyère (46), qui se situe dans la plage comprise entre 5 mm et 30 mm, notamment dans la plage comprise entre 10 mm et 20 mm.

10. Moteur à turbosoufflante selon l'une quelconque des revendications précédentes, **caractérisé en ce que** l'inverseur de poussée (15) est configuré sous la forme d'un inverseur de poussée extérieur ou est configuré sous la forme d'un inverseur de poussée intérieur.

11. Moteur à turbosoufflante selon la revendication 10, lorsqu'elle renvoie à la revendication 3, **caractérisé en ce que** l'inverseur de poussée (15) est configuré sous la forme d'un inverseur de poussée extérieur et l'inverseur de poussée (15) comprend des portes d'inverseur de poussée pivotantes (151), qui sont formées par la zone avant non ajustable (451) de la paroi extérieure (45).

12. Moteur à turbosoufflante selon la revendication 10, lorsqu'elle renvoie à la revendication 3, **caractérisé en ce que** l'inverseur de poussée (15) est configuré sous la forme d'un inverseur de poussée intérieur et l'inverseur de poussée (15) comprend des portes d'inverseur de poussée rotatives (160), qui sont formées par la paroi intérieure (441) et la paroi extérieure (451) de la zone avant non ajustable (41) de la tuyère d'éjection (4) .

13. Moteur à turbosoufflante selon l'une quelconque des revendications précédentes, **caractérisé en ce que** le moteur à turbosoufflante est agencé dans une nacelle de moteur (10) ayant une section transversale circulaire ou approximativement circulaire, et la nacelle de moteur (10) ne comprend pas d'épaississements locaux pour la transmission et/ou d'auxiliaires.

14. Moteur à turbosoufflante selon l'une quelconque des revendications précédentes, **caractérisé en ce qu'**un nez conique (35) agencé en amont de la soufflante à plusieurs niveaux (3) est configuré sous forme déplaçable dans la direction axiale et/ou un mélangeur (12) agencé derrière la turbine à basse pression (92) est prévu, qui mélange de l'air du canal d'écoulement primaire (6) et de l'air du canal d'écoulement secondaire (5), le mélangeur (12) et/ou un cône de sortie (13) du moteur étant configurés sous forme déplaçable axialement.

15. Moteur à turbosoufflante selon l'une quelconque des revendications précédentes, **caractérisé en ce que**, pour au moins un rotor de soufflante ou un stator de soufflante, au centre radial de l'écoulement (43) du canal d'écoulement au travers de la soufflante, l'écart axial entre les pales d'un rotor de soufflante (31, 33) ou d'un stator de soufflante (32) et les pales du stator de soufflante (32) ou du rotor de soufflante (31) agencé directement en amont dans la direction d'écoulement est compris entre 60 % et 150 %, notamment entre 80 % et 130 %, de la longueur axiale des pales du stator de soufflante (32) ou du rotor de soufflante (31) agencé en amont.
